# EUROPÄISCHE PATENTSCHRIFT

(11) **EP 3 562 007 B1**
(45) Veröffentlichungstag und Bekanntmachung des Hinweises auf die Patenterteilung: **07.06.2023**
(21) Anmeldenummer: 19000189.1
(22) Anmeldetag: 17.04.2019
(51) Int. Cl.: H02K 15/02, B32B 37/12, B32B 38/04

(54) **VERFAHREN ZUR HERSTELLUNG VON LAMELLENPAKETEN SOWIE AUFTRAGEINRICHTUNG FÜR EIN KLEBEMITTEL ZUR DURCHFÜHRUNG DES VERFAHRENS**
METHOD FOR THE PREPARATION OF LAMELLAE PACKS AND APPLICATOR FOR AN ADHESIVE FOR PERFORMING THE METHOD
PROCÉDÉ DE FABRICATION DE PAQUETS DE LAMELLES AINSI QUE DISPOSITIF D'APPLICATION POUR UN AGENT ADHÉSIF PERMETTANT LA MISE EN OEUVRE DUDIT PROCÉDÉ

(30) Priorität: 23.04.2018 DE 102018003345
(43) Veröffentlichungstag der Anmeldung: 30.10.2019
(60) Teilanmeldung: 22215713.3
(73) Patentinhaber: Kienle + Spiess GmbH, 74343 Sachsenheim (DE)
(72) Erfinder: Böker, Björn, 73728 Esslingen (DE)
(74) Vertreter: Kohl, Karl-Heinz

(56) Entgegenhaltungen:
- EP-A2- 1 074 307
- JP-A- 2016 140 134

## Beschreibung

Die Erfindung betrifft ein Verfahren zur Herstellung von Lamellenpaketen nach dem Oberbegriff des Anspruches 1.

Lamellenpakete werden aus aufeinandergesetzten, aus Elektroblechen oder Elektrobändern gestanzten Lamellen hergestellt und für Rotoren und/oder Statoren von Elektromotoren oder Generatoren eingesetzt. Innerhalb des Lamellenpaketes werden die aufeinanderliegenden Lamellen mittels eines Klebemittels miteinander verbunden. Damit ein lichtaktivierbarer Klebstoff eine ausreichende Klebefestigkeit erhält, ist nach dem Auftrag des Klebemittels eine Aktivierungsstrecke innerhalb der Stanzeinrichtung erforderlich, damit das Klebemittel beim Stapelvorgang seine Klebwirkung ausüben kann. Die Länge dieser Aktivierungsstrecke hängt von der Hubzahl der Stanzwerkzeuge in der Stanzeinrichtung ab. Je höher diese Hubzahl ist, desto länger ist die Aktivierungsstrecke.

Bei einem bekannten Verfahren (JP 2016 140134 A) wird auf einer Seite der Lamellen eines Lamellenpaketes ein Klebebereich vorgesehen, der aus einer Vielzahl von Vertiefungen besteht, in welche ein Klebemittel eingebracht wird.

Es ist weiter bekannt (EP 1 074 307 A2), einen Kunststoffstrang auf eine Unterlage mit einem Düsenkopf aufzubringen. Um eine Blasenbildung beim Aufbringen und Aushärten des Kunststoffstrangs zu vermeiden, wird kurz vor und/oder nach dem Auftrag der Kunststoff mit UV-Licht bestrahlt und damit fototechnisch zum Aushärten aktiviert.

Der Erfindung liegt die Aufgabe zugrunde, das gattungsgemäße Verfahren derart auszubilden, dass lange Aktivierungsstrecken innerhalb des Stanzprozesses oder eine nachfolgende Aktivierung beim Magnetefügen für das Klebemittel nicht erforderlich sind.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird ein Klebemittel eingesetzt, das mittels Licht aktiviert werden kann. Die Lichtaktivierung erfolgt hierbei unmittelbar vor dem Austritt des Klebemittels aus der Zuleitung der Auftrageinheit. Das Licht wird mit einer solchen Wellenlänge eingesetzt, dass das Klebemittel unmittelbar nach dem Austritt aus der Auftrageinheit aktiviert ist. Um unterschiedliche Aktivierungszeiten zu erhalten, wird die Strahlungsquelle mit einer maximalen Belichtungsstrecke ausgelegt, bezogen auf die Längsrichtung der Zuleitung. Im Bereich dieser Belichtungsstrecke ist die Zuleitung für das Klebemittel für die von der Strahlungsquelle ausgesandte Strahlung durchlässig. Die Belichtungsstrecke kann verkürzt werden, indem zwischen die Zuleitung und die Strahlungsquelle eine Blende gebracht wird, die für die von der Strahlungsquelle ausgehende Strahlung undurchlässig ist, so dass die Strahlung nur in demjenigen Bereich auf das Klebemittel fällt, der nicht von der Blende abgedeckt ist. Die Blende ist verstellbar. Aufgrund dieser Verfahrensführung ist eine Aktivierungsstrecke nicht mehr erforderlich, so dass eine Anlage zur Durchführung des Verfahrens eine entsprechend geringe Baugröße bzw. Baulänge hat.

Das Fügen von Magneten in Rotoren erfolgt vorzugsweise durch Kleben der Magnete an das Rotorpaket. Hierzu werden vorzugsweise lichtaktivierbare Klebstoffe verwendet. Sie werden nach dem Auftrag mittels einer UV-Lampe aktiviert.

Als vorteilhaftes Klebemittel wird ein UV-Kleber verwendet, der mit UV-Licht bestrahlt wird.

Es können auch Klebemittel eingesetzt werden, die beispielsweise durch Elektronenbestrahlung aktivierbar sind. Auch andere Klebemittel, die mittels Licht aktivierbar sind, kommen in Betracht.

Bei einer vorteilhaften Verfahrensführung wird das Klebemittel in Form von Tropfen oder Linien auf eine mit Plasma vorbehandelte Oberfläche aufgebracht. Die Tropfen oder Linien werden dort aufgebracht, wo sie für die Klebeverbindung benachbarter Lamellen innerhalb des Lamellenpakets notwendig sind. Dadurch kann der Klebemittelverbrauch sehr gering gehalten werden.

Durch die Plasmavorbehandlung wird das für die Lamellen eingesetzte Band gereinigt und die Oberflächenenergie des Bandes erhöht. Dadurch wird eine bessere und reproduzierbare Klebstoffbenetzung erzielt.

Das Klebemittel wird vorteilhaft berührungslos aufgebracht, so dass eine Verschmutzung des Ventils der Auftrageinheit gering gehalten werden kann.

Das Klebemittel kann bei einer besonderen Verfahrensweise vor dem Stanzvorgang aufgebracht werden. Die Lamellen zur Bildung des Lamellenpaketes werden erst anschließend gestanzt.

Es ist aber auch möglich, das Klebemittel erst nach dem Stanzvorgang, aber noch vor dem Stapeln zum Lamellenpaket aufzubringen. Bei dieser Verfahrensweise muss bei der Gestaltung der Stanzwerkzeuge nicht auf die Lage des Klebemittels Rücksicht genommen werden.

Bei einer bevorzugten Ausbildung erfolgt die Bestrahlungsdauer des Klebemittels in Abhängigkeit von der Hubzahl eines Stanzwerkzeuges. Je höher die Hubzahl dieses Stanzwerkzeuges ist, um so länger muss das Klebemittel lichtaktiviert werden.

Die Auftragseinheit zur Durchführung des Verfahrens, die eine nicht zur Erfindung gehörende Ausführungsform ("Form" im Folgenden) darstellt, zeichnet sich dadurch aus, dass im Bereich des Ventils wenigstens eine Strahlungsquelle vorgesehen ist, deren Strahlung auf das Klebemittel im Bereich des Ventils gerichtet ist. Dadurch kann das Klebemittel unmittelbar vor dem Austritt aus der Auftrageinheit mit dem erforderlichen Licht bestrahlt und damit aktiviert werden.

Erfindungsgemäß ist die Zuleitung für das Klebemittel im Bereich der von der Strahlungsquelle ausgesandten Strahlung so ausgebildet, dass die Zuleitung für die Strahlung durchlässig ist. Der übrige Bereich der Zuleitung ist für die Strahlung undurchlässig, so dass die Aktivierung erst dann erfolgt, wenn sich das Klebemittel in dem strahlungsdurchlässigen Bereich der Zuleitung befindet.

Der strahlungsdurchlässige Bereich der Zuleitung erstreckt sich vorteilhaft bis zum Ventil. Dadurch wird das Klebemittel so lange mit Licht beaufschlagt, bis es in das Ventil gelangt und ausgetragen wird.

Eine einfache Änderung der Belichtungsdauer ist erfindungsgemäß dadurch möglich, dass der strahlungsdurchlässige Bereich durch wenigstens eine Blende abgedeckt werden kann, die für die Strahlung undurchlässig ist. Mit der Blende ist es möglich, die Länge des strahlungsdurchlässigen Zuleitungsbereiches zu verändern, wodurch auch die Belichtungsdauer verstellt wird.

Vorteilhaft ist es, wenn die Blende stufenlos verstellbar ist. Dadurch kann die Belichtungsdauer sehr feinfühlig durch Verstellen der strahlungsundurchlässigen Blende eingestellt werden.

Bei einer bevorzugten Ausführungsform ist die Blende ringförmig ausgebildet, so dass sie die Zuleitung für das Klebemittel umgibt.

Damit das Klebemittel einfach an der vorgesehenen Stelle der Lamelle vorgesehen werden kann, ist das Ventil vorteilhaft auf einem Träger vorgesehen, der quer zur Vorschubrichtung eines Elektrobandes oder eines Elektrobleches verstellt werden kann.

Eine weitere Form zeichnet sich dadurch aus, dass die Auftrageinrichtung ein Gestell aufweist, in dem wenigstens zwei Auftrageinheiten untergebracht sind. Die eine Auftrageinheit befindet sich im Bereich oberhalb und die andere Auftrageinheit im Bereich unterhalb des Elektrobandes oder Elektrobleches, das durch das Gestell transportiert wird. Dadurch kann auf beide Seiten des Elektrobandes bzw. des Elektrobleches das Klebemittel aufgebracht werden.

Eine weitere vereinfachte Variante ist der Klebstoffauftrag von einer Seite. Hierbei wird der Klebstoff vorzugsweise auf die Oberseite aufgebracht. Weitere Merkmale der Erfindung ergeben sich aus den weiteren Ansprüchen, der Beschreibung und der Zeichnung.

Die Erfindung wird anhand zweier in den Zeichnungen dargestellter Ausführungsformen näher erläutert. Es zeigen
- Fig. 1: in schematischer Darstellung eine Aktivierungs- und Auftrageinheit einer Auftrageinrichtung,
- Fig. 2: in schematischer Darstellung eine weitere Ausführungsform einer Auftrageinheit einer Auftrageinrichtung, die einer Auslochstanzeinrichtung vorgeschaltet ist,
- Fig. 3: in schematischer Darstellung eine weitere Ausführungsform einer Auftrageinheit einer Auftrageinrichtung, die einer Auslochstanzeinrichtung vorgeschaltet ist,
- Fig. 4: in schematischer Darstellung eine Stanzeinrichtung,
- Fig. 5: in schematischer Darstellung eine weitere Form einer Aktivierungs- und Auftrageinheit,

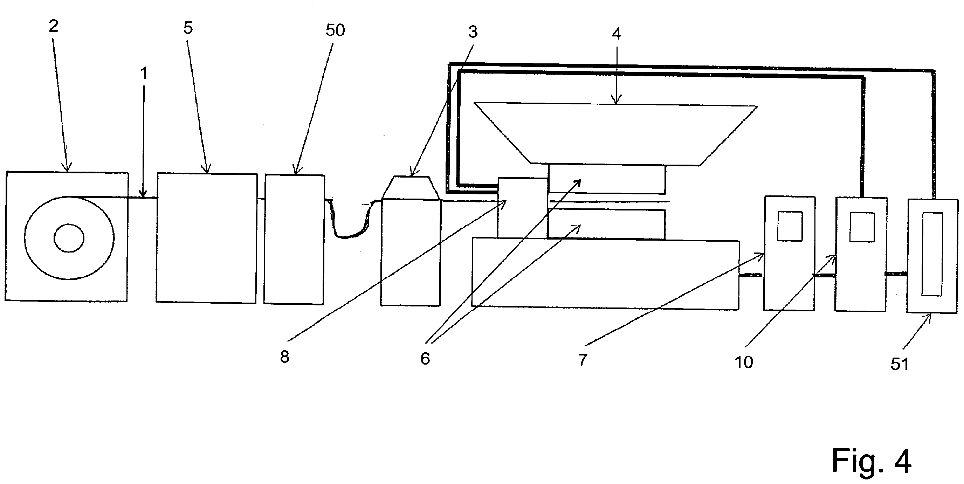

Aus einem Elektroband 1 werden in bekannter Weise Lamellen gestanzt, die zu Lamellenpaketen gestapelt werden, aus denen Rotoren und/oder Statoren für elektrische Antriebe oder Generatoren hergestellt werden. Das Elektroband 1 wird von einem Coil 2 abgewickelt (Fig. 4). Mittels eines Vorschubes 3 wird das Elektroband 1 einer Stanzeinrichtung 4 zugeführt, mit der aus dem Elektroband 1 die Lamellen gestanzt werden. Zwischen dem Vorschub 3 und dem Coil 2 kann ein Richtapparat 5 vorgesehen sein, um das Elektroband 1 zu richten.

Des Weiteren befindet sich im Abschnitt der Bandzuführung eine Plasmaanlage 50 (Fig. 4) zur Reinigung sowie Einstellung der Oberflächenenergie am Band. In einer günstigen Ausführungsform befinden sich die Plasmadüsen innerhalb des Stanzprozesses an einer Position, in welcher die Bandgeschwindigkeit konstant ist. Hierbei sind mindestens eine Düse oberhalb und eine unterhalb des Bandes mit einem definierten Abstand von bis circa 10 mm angeordnet. Mittels der Erhöhung der Oberflächenenergie wird die Benetzung des Klebstoffes optimiert. Dadurch wird die Anbindung des Klebstoffes zur Bandoberfläche verbessert. Damit ist der Klebstoff positionsstabiler während der Bewegung des Bandes in Vorschubrichtung im Stanzprozess. Bei einer günstigen Ausführungsform kann die Oberfläche mittels Abscheidens von Aktivatoren durch den Plasmaprozess nochmals aufgewertet werden.

Die Plasmaanlage 50 ist in Zuführrichtung des Elektrobandes 1 vor der Stanzeinrichtung 4 angeordnet. Hat die Auftrageinheit einen Richtapparat, dann befindet sich die Plasmaanlage 50 vorteilhaft zwischen dem Richtapparat und der Stanzeinrichtung 4.

Die Auftrageinheit 8 ist mit einer schematisch dargestellten Medienversorgung 51 verbunden.

In der Stanzeinrichtung 4 findet sich das entsprechende Werkzeug 6, mit dem aus dem Elektroband 1 die Lamellen gestanzt werden. Die Stanzeinrichtung 4 ist an eine Steuerung 7 angeschlossen, mit welcher der Stanzhub gesteuert wird.

Die Lamellen werden in bekannter Weise in aufeinanderfolgenden Stanzschritten aus dem Elektroband 1 gestanzt. Je nach Breite und/oder Form der Lamellen können die Lamellen in einer oder mehreren Spuren aus dem Elektroband 1 gestanzt werden.

Anstelle eines Elektrobandes können zum Ausstanzen der Lamellen in einer Form auch Elektrobleche oder Streifen eingesetzt werden.

Die ausgestanzten Lamellen werden vorteilhaft in einem (nicht dargestellten) Schacht innerhalb der Stanzeinrichtung 4 gestapelt. Im Schacht befindet sich eine Bremseinrichtung, mit der die Lamellen während der Stapelung festgehalten werden. Da eine solche Stapelung der Lamellen innerhalb der Stanzeinrichtung 4 bekannt ist, wird sie auch nicht näher beschrieben.

Es besteht weiter die Möglichkeit, die ausgestanzten Lamellen außerhalb der Stanzeinrichtung 4 zu stapeln. Auch diese Vorgehensweise ist an sich bekannt und wird daher auch nicht näher beschrieben.

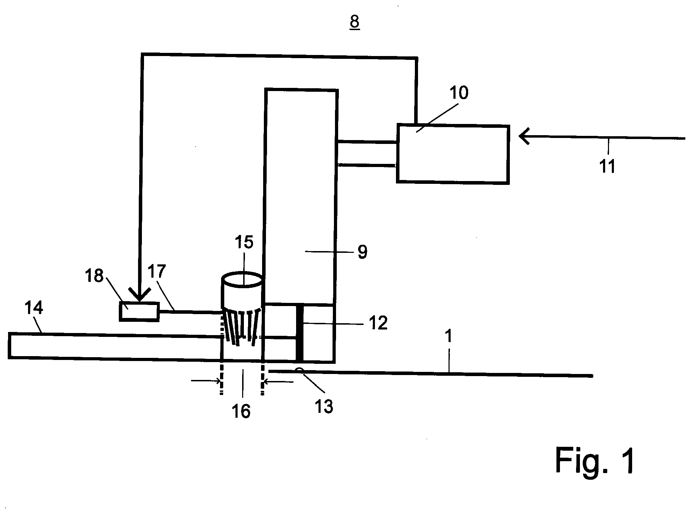

Um die im Stapel aufeinander liegenden Lamellen miteinander zu verbinden, wird ein Klebemittel eingesetzt, das in zu beschreibender Weise auf die Lamellen aufgebracht wird. Für den Klebemittelauftrag ist eine Auftrageinheit 8 vorgesehen, die in Fig. 1 schematisch dargestellt ist. Die Auftrageinheit 8 hat wenigstens ein Ventil 9, das vorteilhaft ein Jetventil ist. Das Ventil 9 ist an eine Steuerung 10 angeschlossen, die in Abhängigkeit von einem zugeführten Pressensignal 11 das Ventil 9 steuert.

Das Ventil 9 hat einen Ventilstößel 12, über den das Klebemittel auf das Elektroband 1 aufgebracht wird. Im dargestellten Ausführungsbeispiel wird das Klebemittel in Form eines Tropfens 13 auf das Elektroband 1 aufgebracht.

Das Klebemittel wird von einem (nicht dargestellten) Vorratsbehälter über eine Zuleitung 14 dem Ventilstößel 12 zugeführt, mit dem das Klebemittel auf das Elektroband 1 aufgebracht wird. Die Zuleitung 14 erstreckt sich bis zum Ventilstößel 12.

Als Klebemittel wird ein durch Strahlung mit geeigneter Wellenlänge aktivierbares Klebemittel eingesetzt. Ein solches Klebemittel ist beispielsweise ein UV-Klebemittel, das mit UV-Licht aktiviert werden kann. Die UV-Strahlung hat eine Wellenlänge im Bereich zwischen etwa 400 bis 550 nm.

Auch andere geeignete lichtaktivierbare Klebemittel können eingesetzt werden, die mit Licht einer entsprechenden Wellenlänge bestrahlt und damit aktiviert wird. Als Licht kommen beispielsweise auch Elektronenstrahlen in Betracht.

Die entsprechende Strahlungsquelle 15 (Fig. 1), die beispielsweise eine UV-Lichtquelle sein kann, ist so angeordnet, dass die von ihr ausgesandte Strahlung auf das in der Zuleitung 14 befindliche Klebemittel unmittelbar vor dem Ventil 9 gelangt und das Klebemittel aktiviert. Vorteilhaft ist die Strahlungsquelle 15 ringförmig ausgebildet, so dass sie die Zuleitung 14 ringförmig umgibt. Die Achse der ringförmigen Strahlungsquelle 15 bildet in diesem Falle die Achse der Zuleitung 14. Selbstverständlich kann die Licht- bzw. Strahlungsquelle 15 auch eine andere Gestaltung haben. Sie muss lediglich so ausgebildet sein, dass die von ihr ausgehende Strahlung das Klebemittel in der Zuleitung 14 ausreichend aktiviert.

Im Strahlungsbereich der Strahlungsquelle 15 ist die Zuleitung 14 für die Strahlung durchlässig. Wenn das Klebemittel auf das Elektroband 1 aufgebracht wird, ist es durch die Strahlungsquelle 15 ausreichend aktiviert, so dass das Klebemittel seine Klebefunktion beim Stapeln der gestanzten Lamellen zum Lamellenstapel erfüllen kann.

Die Belichtungszeit richtet sich nach der Größe der Hubzahl der Stanzeinrichtung 4. Je höher die Hubzahl ist, desto länger ist auch die Belichtungszeit des Klebemittels in der Zuleitung 14.

Um unterschiedliche Aktivierungszeiten zu erhalten, wird die Lichtquelle 15 mit einer maximalen Belichtungsstrecke 16 ausgelegt, bezogen auf die Längsrichtung der Zuleitung 14 (Fig. 1). Im Bereich dieser Belichtungsstrecke 16 ist die Zuleitung 14 für die von der Strahlungsquelle 15 ausgesandte Strahlung durchlässig.

Die in Achsrichtung der Zuleitung 14 gemessene Länge der Belichtungsstrecke 16 bestimmt die maximale Hubzahl der Stanzeinrichtung 4 bzw. ihres Werkzeuges 6.

Werden kleinere Hubzahlen in der Stanzeinrichtung 4 verwendet, kann die Belichtungsstrecke 16 verkürzt werden, indem eine Blende 17 zwischen die Zuleitung 14 und die Strahlungsquelle 15 gebracht wird. Ist die Strahlungsquelle vorteilhaft ringförmig ausgebildet, wird eine entsprechende Ringblende verwendet. Sie ist für die von der Strahlungsquelle 15 ausgehende Strahlung undurchlässig, so dass die Strahlung nur in demjenigen Bereich auf das Klebemittel fällt, der nicht von der Blende abgedeckt ist.

Je geringer die Hubzahl des Werkzeuges 6 in der Stanzeinrichtung 4 ist, desto kleiner kann die Belichtungsstrecke 16 sein. Die Blende wird dementsprechend so weit vorgeschoben, dass nur noch ein geringer Teil der Strahlung auf das Klebemittel trifft.

Die Verstellung der Blende 17 erfolgt vorteilhaft motorisch. Der Antrieb 18 für die Blende 17 ist vorteilhaft an die Steuerung 10 angeschlossen. Da der Steuerung 10 die Pressensignale 11 zugeführt werden, kann sie in Abhängigkeit vom Pressensignal 11 den Antrieb 18 so betätigen, dass die Blende 17 die Länge der Belichtungsstrecke 16 entsprechend der Hubzahl einstellt.

Im dargestellten Ausführungsbeispiel befindet sich die Strahlungsquelle 15 unmittelbar benachbart zum Ventil 9. Dadurch baut die Auftrageinheit 8 kurz, so dass für die Auftrageinheit 8 auch nur ein kleiner Einbauraum erforderlich ist. Die Strahlungsquelle 15 kann aber auch mit Abstand zum Ventil 9 vorgesehen sein. In diesem Falle kann die Strahlungsquelle 15 derart ausgebildet sein, dass sie das Licht zur Aktivierung des Klebemittels bis in den Bereich des Ventiles 9 abstrahlt.

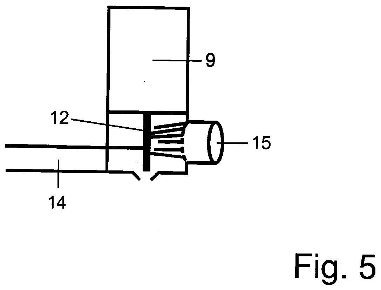

Die Strahlungsquelle 15 kann in einer Form auch so angeordnet sein, dass das von ihr ausgesandte Licht auf den Ventilstößel 12 des Ventiles 9 fällt (Fig. 5). Dies hat zur Folge, dass das Klebemittel unmittelbar vor seinem Austrag aus dem Ventil 9 durch das Licht aktiviert wird. Die Zuleitung 14 für das Klebemittel benötigt in diesem Falle keinen lichtdurchlässigen Bereich. im Übrigen ist die Auftrageinheit gleich ausgebildet wie das Ausführungsbeispiel gemäß Fig. 1.

Bei den beschriebenen Ausführungsbeispielen hat das Ventil 9 nur einen einzigen Ventilstößel 12. Mit einem solchen Ventil 9 wird darum auch nur ein Klebemittetropfen 13 auf das Elektroband 1 aufgebracht.

Das Ventil 9 kann aber auch so ausgebildet sein, dass es zwei oder mehr Ventilstößel 12 aufweist. Diese Ventilstößel sind in Abhängigkeit von der Gestalt der zu stanzenden Lamellen angeordnet. Dann können die Klebemitteltropfen an denjenigen Stellen der Lamelle aufgebracht werden, die für den Zusammenhalt der Lamellen innerhalb des Lamellenpaketes optimal sind.

Die Auftrageinheit 8 kann vor der Stanzeinrichtung 4 angeordnet sein, so dass die Lamellen erst dann aus dem Elektroband 1 gestanzt werden, wenn das Klebemittel bereits auf das Elektroband an den erforderlichen Stellen aufgebracht worden ist.

Es besteht aber auch die Möglichkeit, die Auftrageinheit 8 nach dem Stanzwerkzeug anzuordnen, bevor die gestanzten Lamellen in den Stapelschacht gelangen. Der Ausstoßstempel, mit dem die Lamellen in diesen Schacht gedrückt werden, ist so ausgebildet, dass er mit den auf der Lamelle befindlichen Klebemitteltropfen 13 nicht in Berührung kommt.

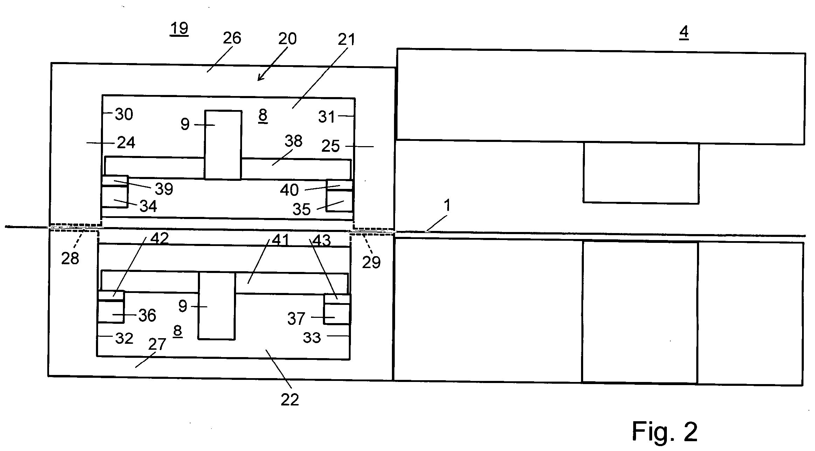

Fig. 2 zeigt eine der Stanzeinrichtung 4 vorgeschaltete Einrichtung 19, die zwei Auftrageinheiten 8 aufweist, die im Bereich oberhalb und unterhalb des Elektrobandes 1 angeordnet sind.

Die Einrichtung hat ein portalförmiges Gestell 20, in dem zwei übereinanderliegende Aufnahmeräume 21, 22 vorgesehen sind, in denen jeweils eine Auftrageinheit 8 untergebracht ist.

Das Gestell 20 hat zwei parallel zueinander liegende vertikale Ständer 24, 25, die am oberen Ende durch einen Querträger 26 miteinander verbunden sind. Die Ständer 24, 25 können am unteren Ende durch einen weiteren Querträger 27 miteinander verbunden sein.

Im Ständer 24 befindet sich eine schematisch dargestellte Einlassöffnung 28 und im Ständer 25 eine schematisch dargestellte Auslassöffnung 29 für den Durchtritt des Elektrobandes 1.

In den beiden Aufnahmeräumen 21, 22 sind an den einander gegenüberliegenden Innenseiten 30, 31; 32, 33 der Ständer 24, 25 horizontal sich erstreckende Schienen 34, 35; 36, 37 befestigt. Die Schienen 34 bis 37 erstrecken sich parallel zum Elektroband 1. Auf den Schienen 34, 35 ist eine Ventilplatte 38 gelagert, die längs der Schienen 34, 35 quer zur Vorschubrichtung des Elektrobandes 1 horizontal verfahren werden kann. Die Ventilplatte 38 trägt das Ventil 9 mit dem (nicht dargestellten) Ventilstößel. Vorteilhaft ist die Ventilplatte 38 unter Zwischenlage jeweils wenigstens eines Federelementes 39, 40 als Entkopplungselement auf den Schienen 34, 35 gelagert. Das Ventil 9 ist vorteilhaft in Höhenrichtung gegenüber der Ventilplatte 38 verstellbar, um den Abstand zwischen dem Ventil 9 und dem Elektroband 1 einstellen zu können.

Auf den Schienen 36, 37 im unteren Aufnahmeraum 22 ist ebenfalls eine Ventilplatte 41 gelagert. Auch die Ventilplatte 41 liegt vorteilhaft unter Zwischenlage jeweils wenigstens eines Federelementes 42, 43 als Entkopplungselement auf den Schienen 36, 37 auf. Die Ventilplatte 41 trägt das Ventil 9, das in Höhenrichtung verstellbar in der Ventilplatte 41 gelagert ist.

Die beiden Ventilplatten 38, 41 mit dem Ventil 9 sind spiegelbildlich zueinander angeordnet.

Mit den beiden Auftrageinheiten 8 kann auf die Ober- und die Unterseite des Elektrobandes 1 das Klebemittel aufgetragen werden. Durch Verfahren der Ventilplatte 38, 41 kann die Position der Klebetropfen 13 auf dem Elektroband 1 bestimmt werden.

Vorteilhaft sind beide Auftrageinheiten 8 gleich ausgebildet. Grundsätzlich können die Auftrageinheiten 8 auch eine unterschiedliche Ausgestaltung haben.

Die beiden Auftrageinheiten 8 haben, wie anhand der Fig. 1 und der Form gemäß Fig. 5 erläutert worden ist, jeweils wenigstens eine Strahlungsquelle 15, um das Klebemittel mit Licht der erforderlichen Wellenlänge zu aktivieren, bevor es auf das Elektroband 1 aufgebracht wird.

Das mit den Klebemitteltropfen 13 versehene Elektroband 1 gelangt anschließend in die Stanzeinrichtung 4, mit der Lamellen aus dem Elektroband 1 in bekannter Weise gestanzt werden.

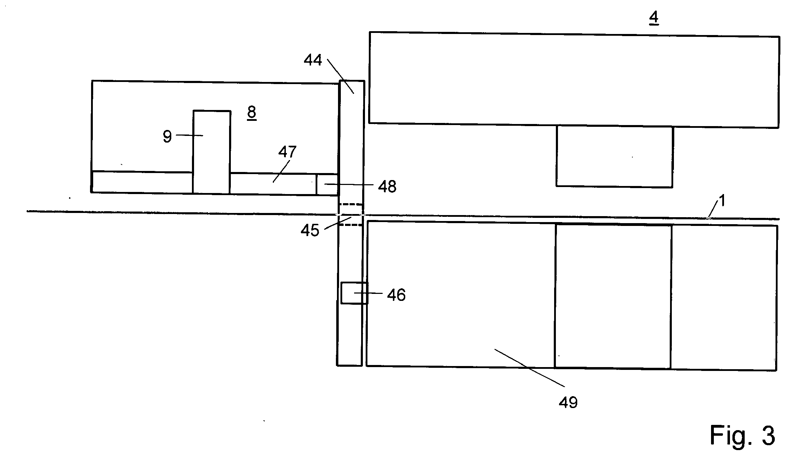

Bei der Ausführungsform gemäß Fig. 3 ist das Gestell 44 ein vertikaler Ständer. In ihm befindet sich eine schematisch dargestellte Einlassöffnung 45 für den Durchtritt des Elektrobandes 1. Am Ständer 44 ist eine Ventilplatte 47 gelagert, die längs Schienen 46 quer zur Vorschubrichtung des Elektrobandes 1 horizontal verfahren werden kann. Die Schienen 46 sind an einem Werkzeugunterteil 49 der Stanzeinrichtung 4 befestigt und erstrecken sich parallel zum Elektroband 1. Die Ventilplatte 47 trägt das Ventil 9 mit dem (nicht dargestellten) Ventilstößel. Vorteilhaft ist die Ventilplatte 47 unter Zwischenlage wenigstens eines Federelementes 48 als Entkopplungselement an dem Ständer 44 gelagert. Das Ventil 9 ist vorteilhaft in Höhenrichtung gegenüber der Ventilplatte 47 verstellbar, um den Abstand zwischen dem Ventil 9 und dem Elektroband 1 einstellen zu können.

Mit mindestens einer Auftrageinheit 8 kann auf die Oberseite des Elektrobandes 1 das Klebemittel aufgetragen werden. Durch Verfahren der Ventilplatte 47 kann die Position der Klebetropfen 13 auf dem Elektroband 1 bestimmt werden. Im Unterschied zur Ausführungsform nach Fig. 2 ist nur im Bereich oberhalb des Elektrobandes 1 die Auftrageinheit 8 vorgesehen. Sie hat die wenigstens eine Strahlungsquelle 15 (Fig. 1 und 5), um das Klebemittel in der beschriebenen Weise zu aktivieren.

## Patentansprüche

1. Verfahren zur Herstellung von Lamellenpaketen für Rotoren und/oder Statoren von Elektromotoren oder Generatoren, bei dem Lamellen mittels eines in einer Stanzeinrichtung (4) befindlichen Stanzwerkzeugs (6) aus einem Elektroband gestanzt werden, wobei die Stanzeinrichtung (4) an eine Steuerung (7) angeschlossen ist, mit welcher der Stanzhub gesteuert wird, wobei auf wenigstens eine Seite der Lamelle ein Klebemittel aufgebracht und die Lamellen zum Lamellenpaket gestapelt werden, wobei das Klebemittel von einem Vorratsbehälter über eine Zuleitung (14) einem Ventilstössel (12) eines Ventils (9) einer Auftrageinheit (8) zugeführt wird, wobei mit dem Ventilstössel das Klebemittel aufgebracht wird und wobei sich die Zuleitung (14) bis zum Ventilstössel erstreckt, wobei die im Lamellenstapel aufeinander liegenden Lamellen durch das Klebemittel miteinander verbunden werden,
**dadurch gekennzeichnet, dass** als Klebemittel ein mit aus einer Strahlungsquelle stammendem Licht erforderlicher Wellenlänge aktivierbares Klebemittel eingesetzt wird, wobei das Klebemittel unmittelbar vor dem Austritt aus der Auftrageinheit (8) mit diesem Licht bestrahlt und mit diesem Licht aktiviert wird, wobei die Strahlungsquelle (15) mit einer maximalen Belichtungsstrecke (16), bezogen auf die Längsrichtung der Zuleitung (14), ausgelegt wird, wobei im Bereich dieser Belichtungsstrecke (16) die Zuleitung (14) für die von der Strahlungsquelle (15) ausgesandte Strahlung durchlässig ist, wobei die Belichtungsstrecke (16) verkürzt werden kann, indem zwischen die Zuleitung (14) und die Strahlungsquelle (15) eine Blende (17) gebracht wird, die für die von der Strahlungsquelle (15) ausgehende Strahlung undurchlässig ist, so dass die Strahlung nur in demjenigen Bereich auf das Klebemittel fällt, der nicht von der Blende (17) abgedeckt ist, wobei die Blende (17) verstellbar ist.

2. Verfahren nach Anspruch 1, wobei ein Lamellenpaket eines Rotors hergestellt wird,
**dadurch gekennzeichnet, dass** zur Fixierung von Magneten am Rotor eine Klebstoffaktivierung durchgeführt wird.

3. Verfahren nach Anspruch 1 oder 2,
**dadurch gekennzeichnet, dass** das vorteilhaft als UV-Kleber ausgebildete Klebemittel in Form von Tropfen (13) aufgebracht wird.

4. Verfahren nach einem der Ansprüche 1 bis 3,
**dadurch gekennzeichnet, dass** das Klebemittel berührungslos aufgebracht wird.

5. Verfahren nach einem der Ansprüche 1 bis 4,
**dadurch gekennzeichnet, dass** das Klebemittel vor oder nach dem Stanzvorgang aufgebracht wird.

6. Verfahren nach einem der Ansprüche 1 bis 5,
**dadurch gekennzeichnet, dass** die Bestrahlungsdauer in Abhängigkeit von der Hubzahl des Stanzwerkzeuges (6) erfolgt.

7. Verfahren nach einem der Ansprüche 1 bis 6,
**dadurch gekennzeichnet, dass** mittels einer Plasmabehandlung die Oberflächenenergie eingestellt und die Oberfläche der Lamelle aktiviert wird.

8. Verfahren nach einem der Ansprüche 1 bis 7, wobei ein Lamellenpaket des Rotors hergestellt wird,
**dadurch gekennzeichnet, dass** am für Rotoren vorgesehenen Lamellenpaket Magnete mittels des Klebemittels befestigt werden, das vor oder nach dem Fügen der Magnete eingebracht wird.

9. Verfahren nach Anspruch 8,
**dadurch gekennzeichnet, dass** die Bestrahlungsdauer in Abhängigkeit von der Fügezeit bzw. Klebstoffoffenzeit der Magnete erfolgt.

## Claims

1. Method for manufacturing lamella packets for rotors and/or stators of electric motors or generators, in which lamellae are punched out of an electric strip by means of a punching tool (6) located in a punching device (4), wherein the punching device (4) is connected to a controller (7), which is used to control the punching stroke, wherein an adhesive is applied to at least one side of the lamella, and the lamellae are stacked into a lamella packet, wherein the adhesive is supplied to a valve tappet (12) of a valve (9) of an application unit (8) from a storage tank via a feed line (14), wherein the valve tappet is used to apply the adhesive, and wherein the feed line (14) extends up to the valve tappet, wherein the lamellae lying one on top of the other in the lamella stack are connected with each other by the adhesive, **characterized in that** the adhesive used is an adhesive that can be activated with light of a required wavelength coming from a radiation source, wherein the adhesive is irradiated with this light immediately before exiting the application unit (8), and activated with this light, wherein the radiation source (15) is designed with a maximum exposure path (16) in relation to the longitudinal direction of the feed line (14), wherein the feed line (14) is permeable to the radiation emitted by the radiation source (15) in the area of this exposure path (16), wherein the exposure path (16) can be shortened by putting an aperture (17) that is impermeable to the radiation emanating from the radiation source (15) between the feed line (14) and the radiation source (15), so that the radiation falls on the adhesive only in the area not covered by the aperture (17), wherein the aperture (17) is displaceable.

2. Method according to claim 1, wherein a lamella packet of a rotor is manufactured,
**characterized in that** an adhesive is activated to fix magnets on the rotor.

3. Method according to claim 1 or 2,
**characterized in that** the adhesive advantageously designed as a UV adhesive is applied in the form of drops (13).

4. Method according to one of claims 1 to 3,
**characterized in that** the adhesive is applied without contact.

5. Method according to one of claims 1 to 4,
**characterized in that** the adhesive is applied before or after the punching process.

6. Method according to one of claims 1 to 5,
**characterized in that** the irradiation time depends on the stroke rate of the punching tool (6).

7. Method according to one of claims 1 to 6,
**characterized in that** a plasma treatment is used to set the surface energy and activate the surface of the lamella.

8. Method according to one of claims 1 to 7, wherein a lamella packet of the rotor is manufactured, **characterized in that** magnets are fastened to the lamella packet provided for rotors by means of the adhesive, which is introduced before or after joining the magnets.

9. Method according to claim 8,
**characterized in that** the irradiation time depends on the joining time or adhesive open time of the magnets .

## Revendications

1. Procédé de fabrication de paquets de lamelles pour des rotors et/ou des stators de moteurs électriques ou de générateurs, dans lequel des lamelles sont estampées à partir d'un feuillard électrique au moyen d'un outil d'estampage (6) placé dans un dispositif d'estampage (4), dans lequel le dispositif d'estampage (4) est raccordé à une commande (7) permettant de commander la course d'estampage, dans lequel un agent adhésif est appliqué sur au moins un côté de la lamelle et les lamelles sont empilées en un paquet de lamelles, dans lequel l'agent adhésif est alimenté vers un poussoir de soupape (12) d'une soupape (9) d'une unité d'application (8) à partir d'un récipient de stockage par le biais d'une conduite d'amenée (14), dans lequel l'agent adhésif est appliqué à l'aide du poussoir de soupape et dans lequel la conduite d'amenée (14) s'étend jusqu'au poussoir de soupape, dans lequel les lamelles superposées dans la pile de lamelles sont reliées entre elles par l'agent adhésif,
**caractérisé en ce qu'**un agent adhésif activable par une lumière d'une longueur d'onde requise provenant d'une source de rayonnement est utilisé en tant qu'agent adhésif, dans lequel l'agent adhésif est irradié avec cette lumière et activé avec cette lumière immédiatement avant la sortie hors de l'unité d'application (8), dans lequel la source de rayonnement (15) est configurée avec un trajet d'exposition (16) maximal par rapport à la direction longitudinale de la conduite d'amenée (14), dans lequel la conduite d'amenée (14) est transparente au rayonnement émis par la source de rayonnement (15) dans la région de ce trajet d'exposition (16), dans lequel le trajet d'exposition (16) peut être raccourci en plaçant un écran (17) entre la conduite d'amenée (14) et la source de rayonnement (15), lequel est opaque au rayonnement émis par la source de rayonnement (15), de sorte que le rayonnement n'atteint l'agent adhésif que dans la région non recouverte par l'écran (17), l'écran (17) étant réglable.

2. Procédé selon la revendication 1, destiné à fabriquer un paquet de lamelles d'un rotor,
**caractérisé en ce qu'**une activation de colle est réalisée pour la fixation d'aimants sur le rotor.

3. Procédé selon la revendication 1 ou 2,
**caractérisé en ce que** l'agent adhésif consistant avantageusement en une colle UV est appliqué sous forme de gouttes (13).

4. Procédé selon l'une des revendications 1 à 3,
**caractérisé en ce que** l'agent adhésif est appliqué sans contact.

5. Procédé selon l'une des revendications 1 à 4,
**caractérisé en ce que** l'agent adhésif est appliqué avant ou après l'opération d'estampage.

6. Procédé selon l'une des revendications 1 à 5,
**caractérisé en ce que** la durée d'irradiation dépend du nombre de courses de l'outil d'estampage (6).

7. Procédé selon l'une des revendications 1 à 6,
**caractérisé en ce qu'**un traitement au plasma permet de régler l'énergie de surface et d'activer la surface des lamelles.

8. Procédé selon l'une des revendications 1 à 7, destiné à fabriquer un paquet de lamelles d'un rotor,
**caractérisé en ce que** des aimants sont fixés sur le paquet de lamelles prévu pour des rotors au moyen de l'agent adhésif introduit avant ou après le collage des aimants.

9. Procédé selon la revendication 8,
**caractérisé en ce que** la durée d'irradiation dépend du temps de collage ou du temps d'ouverture de colle des aimants.
